# EUROPEAN PATENT APPLICATION

(11) **EP 4 406 686 A1**
(43) Date of publication of application: **31.07.2024**
(21) Application number: 22876849.5
(22) Date of filing: 28.09.2022
(51) Int. Cl.: B23K 26/03, B23K 26/042, B23K 26/062, B23K 26/046, B23K 26/06

(54) **LASER PROCESSING APPARATUS, METHOD INVOLVING SAME, AND OBJECT PROCESSED THEREBY**

(30) Priority: 29.09.2021 KR 20210128496
(71) Applicant: Laserwall Technology Co., Ltd, Hwaseong-si, Gyeonggi-do 16648 (KR)
(72) Inventor: KIM, Jin Ha, Daejeon 34403 (KR); CHOI, Byoung Chan, Gwangmyeong-si Gyeonggi-do 14255 (KR); KANG, Ki Seok, Sokcho-si Gangwon-do 24895 (KR)
(74) Representative: BCKIP Part mbB
(86) International application number: PCT/KR2022/014565
(87) International publication number: WO 2023/055077

(57) **Abstract**

The present invention relates to a laser processing apparatus comprising an intelligent optical head, and provides a laser processing apparatus comprising: a laser generation unit; a beam conversion apparatus for adjusting the size or shape of a laser beam generated by the laser generation unit; a beam adjustment unit for adjusting the focal position of the laser beam comprising passed through the beam conversion apparatus; a heat distribution measurement unit for measuring at least one of the surface temperature and the melting temperature of a processing target; a control unit for adjusting or controlling the intensity of the laser beam at the measured temperature of the processing target; and a beam focusing unit for focusing and transmitting the laser beam comprising passed through the beam conversion apparatus to the processing target, and a method including same.

## Description

### Technical field

The present invention relates to a laser processing apparatus, a method including the same, and processed objects processed thereby.

### Background Art

Laser processing refers to processing an object by using a laser beam, and in recent years, laser processing is used for the purpose of forming a predetermined pattern or the like on a surface to be processed of processed objects. A laser apparatus used for such laser processing is an apparatus that forms a predetermined pattern or the like on a processed object using a laser.

However, the conventional laser apparatus does not have a configuration that directly measures the heating temperature of the processed object. For example, the conventional laser apparatus has a structure in which the surface of the processed object is indirectly processed by adjusting the output of the laser beam irradiated indirectly, but the temperature of the surface to be processed of the processed object cannot be directly measured, and thus the processing efficiency is inevitably lowered.

### Summary of Invention

### Technical Problem

Embodiments of the present invention provide a laser processing apparatus, a method including same, and a processed object thereby, comprising significantly improved processing efficiency by directly measuring and correcting, on a real-time basis, the surface temperature and the melting temperature of the processed object during processing, such as soldering, welding, and patterning, in the laser processing apparatus for the processed object.

In addition, the present invention provides a laser processing apparatus, a method including same, and a processed object thereby, wherein the laser processing apparatus enables correction by measuring the surface temperature and the melting temperature of the processed object during a processing step, thereby enabling more effective processing without losing or changing the center energy distribution of the processing region.

The technical problems of the present disclosure are not limited to the technical problems mentioned above, and other technical problems not mentioned will be clearly understood by those skilled in the art from the following descriptions.

### Solution to Problem

According to an embodiment of the present disclosure, a laser processing apparatus comprises: a laser generation unit; a beam conversion apparatus for adjusting the size or shape of a laser beam generated by the laser generation unit; a beam adjustment unit for adjusting the focal position of the laser beam passing through the beam conversion apparatus; a heat distribution measurement unit for measuring at least one among the surface temperature and the melting temperature of a processing object; a control unit for adjusting or controlling the intensity of the laser beam with the measured temperature of the processing object; and a beam focusing unit for focusing and transmitting the laser beam passing through the beam conversion apparatus to the processing object.

In an embodiment of the present disclosure, the beam focusing unit may further include a laser output sensing unit configured to measure and adjust an output of the laser.

In an embodiment of the present disclosure, the laser processing apparatus may further include a laser irradiator configured to irradiate the laser beam to the processed object by obtaining information on a position and an alignment state to which the laser transmitted from the beam focusing unit is to be irradiated.

In an embodiment of the present disclosure, the area of the measurement point of the heat distribution measurement unit may be set in a range smaller than the area of the processed object.

In an exemplary embodiment of the present disclosure, the heat distribution measuring unit may measure a surface temperature or a melting temperature of the processed object in a temperature range of 1 to 500 degrees.

In one embodiment of the present disclosure, the heat distribution measurement unit may include at least one of an infrared camera and a pyrometer.

In an exemplary embodiment of the present invention, the heat distribution measuring part may be coupled to an upper end portion of the light collecting part to increase measurement efficiency of at least one of the surface temperature or the melting temperature of the processed object.

In an embodiment of the present disclosure, the laser output irradiated from the laser irradiation unit may include a structure irradiated in a range of 1 to 4,000 Watt.

In an exemplary embodiment of the present disclosure, an output power of the laser beam of the laser irradiation unit may be adjusted according to a surface temperature or a melting temperature of the processed object of the thermal distribution measurement unit.

In an embodiment of the present disclosure, at least one optical lens for correcting the magnification of the laser may be disposed in the laser generating unit.

In an embodiment of the present disclosure, a structure in which an illumination unit is disposed on one side of the laser generation unit may be included.

In an embodiment of the present disclosure, the irradiation position and alignment state information of the laser may be acquired by an imaging apparatus including at least one of a CCD and a CMOS.

In an embodiment of the present disclosure, the laser beam irradiated from the laser generating unit may sequentially pass through the beam focusing unit and the laser irradiating unit and then may be irradiated with one same central axis.

In an embodiment of the present disclosure, the controller of the laser processing apparatus may control to adjust at least one of an output, a current, and a voltage of the laser according to the measured temperature of the heat distribution measuring unit.

Meanwhile, the present invention provides a processing method using the laser processing apparatus, the processing method may include: a processing object loading step of loading a processing object into the laser processing apparatus; a step of inputting processing data including a laser output for laser processing of the processing object; a step of acquiring surface temperature or melting temperature information measured in real time from a heat distribution measuring unit Pyrometer (Infrared camera) for laser processing of the processing object; and a step of adjusting the laser output irradiated to the processing object by reflecting the information acquired from the heat distribution measuring unit.

In addition, the present invention provides a workpiece processed by a laser processing apparatus.

### Effects of the invention

The laser processing apparatus, the method including the same, and the object processed by the laser processing apparatus according to the present invention directly measure and correct the surface temperature and the melting temperature of the object in real time during processing such as soldering, welding, and patterning, thereby greatly improving processing efficiency.

In addition, the laser processing apparatus, the method including the same, and the object processed by the same, according to the present invention, enable correction by measuring the surface temperature and the melting temperature of the object during the processing, in the laser processing apparatus for the processed object, thereby enabling more effective processing without losing or changing the distribution of the central energy of the processing region.

### Brief Description of Drawings

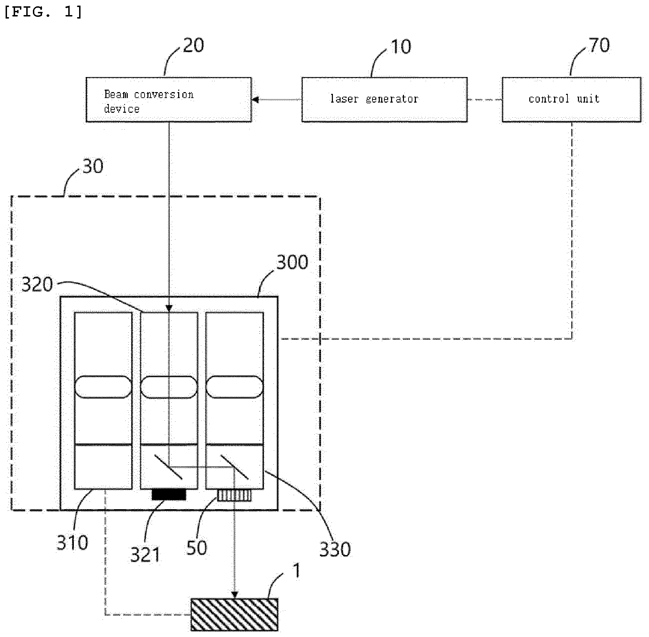

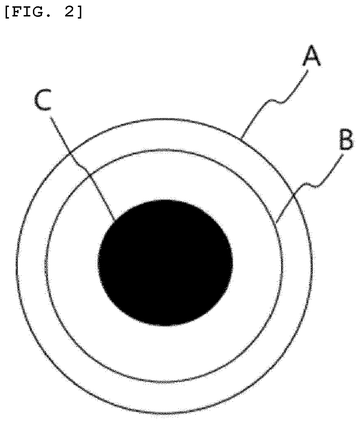

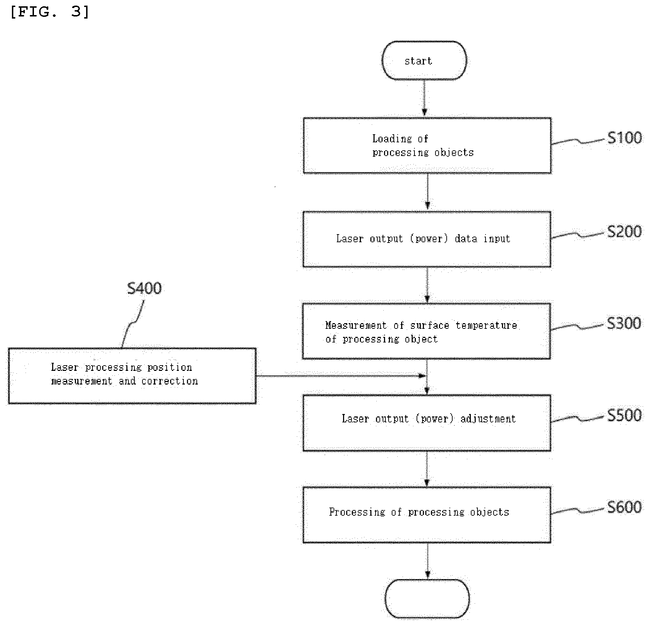

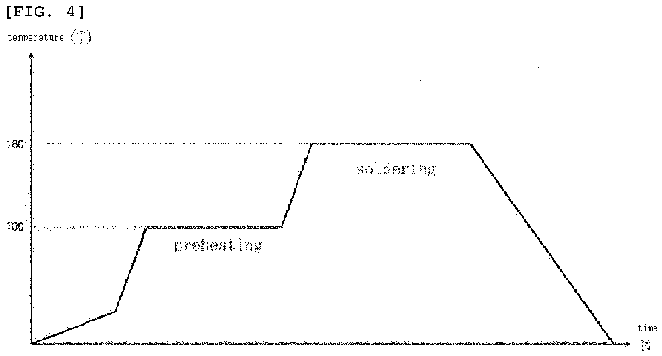

FIG. 1 is a schematic configuration diagram of a laser processing apparatus according to an embodiment of the present invention, FIG. 2 is a view illustrating a processing area of a processed object according to an embodiment of the present invention, FIG. 3 is a flowchart illustrating a laser processing method according to an embodiment of the present invention, and FIG. 4 is a graph illustrating an example of laser processing according to an embodiment of the present invention.

### Description of Embodiments

Hereinafter, a laser processing apparatus according to an embodiment of the present invention will be described in detail with reference to the accompanying drawings.

It should be noted that, in adding reference numerals to elements of each drawing, the same elements will be designated by the same reference numerals, if possible, even though they are shown in different drawings. In addition, in describing the embodiment of the present invention, when it is determined that a detailed description of a related known configuration or function interferes with the understanding of the embodiment of the present invention, the detailed description thereof will be omitted.

In describing the components of the embodiments of the present disclosure, terms such as first, second, A, B, (a), (b), etc. may be used. These terms are merely for distinguishing the elements from other elements, and the nature, order, or order of the elements is not limited by the terms. In addition, unless otherwise defined, all terms used herein, including technical or scientific terms, have the same meanings as those generally understood by those skilled in the art to which the present invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The present invention relates to an apparatus for processing an object through a laser beam, which directly measures and reflects the temperature of an processed object to perform a processing process, thereby enabling more effective processing. Such processing means transmitting a laser beam to perform processes such as marking, cutting, scribing, patterning, soldering, and welding on the object.

Hereinafter, the laser processing apparatus and method of the processed object will be described separately, but the description will be omitted in the description of the apparatus, and it goes without saying that the specific steps described only in the description of the method may be performed through the apparatus according to the embodiment of the present invention.

FIG. 1 is a schematic configuration diagram of a laser processing apparatus according to an embodiment of the present invention, and FIG. 2 is a view illustrating a processing area of a processed object according to an embodiment of the present invention.

Referring to these drawings, a laser processing apparatus 100 according to an embodiment of the present disclosure may include a laser generation unit 10, a beam conversion apparatus 20 configured to adjust a size or a shape of a laser beam generated by the laser generation unit 10, a beam adjustment unit 30 configured to adjust a focal position of the laser beam comprising passed through the beam conversion apparatus 20 and measure a temperature of a processing object, a heat distribution measurement unit 310 configured to measure at least one of a surface temperature and a melting temperature of the processing object, a control unit 70 configured to adjust or control an intensity of the laser beam by reflecting the measured temperature of the processing object, and a beam focusing unit 320 configured to focus and transmit the laser beam comprising passed through the beam conversion apparatus to the processing object.

In some cases, the beam adjustment unit 30 may be configured to include the optical head module 300 according to the present invention. That is, the optical head module 300 of the beam adjustment unit 30 may be configured to include a beam focusing unit 320 that focuses and transmits the laser beam passing through the beam conversion apparatus 20 to the processed object, a laser irradiation unit 330 that acquires information on a position and an alignment state at which the laser beam adjusted by the beam focusing unit 320 is to be irradiated and irradiates the laser beam to the processed object, and a heat distribution measurement unit 310 that measures a surface temperature and a melting temperature with respect to a processing point of the processed object.

The laser generation unit 10 may generate a laser beam for processing a sample 1, which is a processed object. Specifically, a continuous wave laser or a pulsed laser may be used. As the wavelength of the laser beam, all of the laser wavelengths located in the infrared region to the ultraviolet region may be used. For example, it may include an ultraviolet wavelength, a green wavelength, an infrared wavelength, and the like. The laser beam generated by the laser generation unit 10 may pass through the beam conversion apparatus 20 and the beam adjustment unit 30.

The beam conversion apparatus 20 may adjust the size or shape of the laser beam generated by the laser generation unit 10. Specifically, the beam conversion apparatus 20 may enlarge or reduce the laser beam. In addition, the beam conversion apparatus 20 may generate the laser beam as a collimated beam comprising low dispersion or concentration. Accordingly, the laser beam LB generated by the laser generation unit 10 may be expanded or reduced via the beam conversion apparatus 20 to be scaled up, thereby being generated as a collimated beam.

The size of the laser beam changed by the beam conversion apparatus 20 may be the size of the laser beam incident on the lens at the last stage of the laser processing apparatus 100. The beam conversion apparatus 20 may change the diameter of the laser beam generated by the laser generation unit 10 and output the changed laser beam. The beam conversion apparatus 20 may be manually or automatically adjusted. Here, the beam conversion apparatus 20 may convert the shape of the Gaussian beam into a shape of a flat-top beam or a multi-spot and output the converted shape. The shape of the flat-top beam may be one of a circular shape, a polygonal shape, and a ring shape.

In addition, various optical elements such as a beam attenuator, a polarizing plate, a half-wave plate, a splitter, a filter, and a shutter may be further disposed.

The beam adjustment unit 30 may adjust a position such as the focal height of the laser beam through the dynamic focusing module 31. The adjusted laser beam may be irradiated to the sample 1, which is the processed object, at a predetermined laser power through the optical head module 300 of the beam adjustment unit 30.

The controller 70 may determine previously input laser output data to process the sample 1, which is the processed object, according to the surface temperature or the melting temperature of the sample 1, which is the processed object. Based on this data, the surface of the sample 1, which is the processed object, may be soldered. In some cases, fine patterns, markings, scribing and cutting comprising nano-scale width and depth in micro units may be performed on the surface of the processed object.

Meanwhile, as described above, the optical head module 300 according to an embodiment of the present invention may include the beam focusing unit 320 that focuses and transmits the laser beam passing through the beam conversion apparatus 20 to the processed object, the laser irradiation unit 330 that obtains the position and alignment state information to which the laser beam adjusted by the beam focusing unit 320 is to be irradiated and irradiates the laser beam to the processed object, and the heat distribution measurement unit 310 that measures the surface temperature, the melting temperature, and the like of the processing point of the processed object.

Here, the heat distribution measurement unit 310 of the optical head module 300 according to the present invention may measure the surface temperature and the melting temperature of the sample 1, which is the processed object. The heat distribution measurement unit 310, which is a non-contact type radiothermometer, may measure the surface temperature of the sample 1, which is the processed object, in real time and transmit the measured result to the control unit 70. According to such a measurement result, the controller 70 may adjust the output of the laser beam. The heat distribution measurement part 310 may be, for example, an infrared camera or a pyrometer.

The beam focusing unit 320 of the optical head module 300 may adjust the position of the focal height of the laser beam and the like, and the laser irradiation unit 330 of the optical head module 300 may adjust the focal position of the laser beam along the sample 1 that is the processed object. For example, the beam focusing unit 320 may adjust the focal position of the laser beam passing through the condensing unit 50 according to the processing height set through matching with the position information of the sample 1, which is the processed object.

The beam focusing unit 320 may irradiate the laser beam by adjusting a focal length of the laser beam transmitted to the laser irradiation unit 330 by driving a motor (not shown) that horizontally reciprocates. For example, when one lens moves to the right in the beam focusing unit 320, the focus of the laser beam is moved away from the sample 1, which is the processed object, and thus the laser beam moves to the upper side of the ground, thereby shortening the focal height of the laser beam. On the contrary, when one lens inside the beam focusing unit 320 moves to the left, the laser beam approaches the sample 1 that is the processed object, so that the focus of the laser beam may move to the lower side of the ground.

A laser output sensing unit 321 for sensing an output of a laser beam may be disposed at one end of the beam focusing unit 320. The laser output detection unit 321 may detect the output of the laser beam irradiated from the laser generation unit 10 and transmit the output to the control unit 70 together with information such as the surface temperature of the sample 1, which is the processed object, measured by the heat distribution measurement unit 310.

A light collector 50 for focusing the laser beam passing through the beam focusing unit 320 on the sample 1, which is the processed object, may be disposed below the laser irradiator 330 of the optical head module 300.

The light collector 50 may focus a laser beam. The condensing unit 50 may condense the laser beam passing through the laser irradiation unit 330 and irradiate the laser beam onto the sample 1 that is the processed object. The condensing unit 50 may be composed of one or more lenses, and may include a telecentric lens.

Through these configurations, at least one or more of various parameters such as an irradiation position of the laser beam, a focal length, a pulse waveform of the output laser beam, power, an irradiation time, a processing speed, divergence and convergence characteristics, and a shape of the beam may be adjusted.

The controller 70 may extract focal position data to which a laser beam is irradiated in order to process the surface of the sample 1, which is an processed object. Based on this data, the focal position data may be controlled by the laser irradiation unit 330. In addition, the focus position data may be controlled by the beam focusing unit 320 to control the processed data in real time.

The laser processing apparatus 100 of the processed object according to an embodiment of the present invention may further include a precision stage (not shown). When the sample 1, which is the processed object, is mounted on the stage for processing, there is a possibility that deformation beyond the effective focal length of the optical system may occur. Therefore, the sample 1, which is the processed object, may be controlled to be positioned within the effective processing area and the effective focal distance of the beam focusing unit 320 and the laser irradiation unit 320 according to the combination of a large number of axes within the coordinate system defined through the precision stage.

Hereinafter, a process of processing an processed object using the above-described laser processing apparatus 100 according to the present invention will be described with reference to the drawings.

FIG. 3 is a flowchart illustrating a laser processing method according to an embodiment of the present invention, and FIG. 4 is a graph illustrating an example of laser processing according to an embodiment of the present invention.

Referring to these drawings, the method may include a process object loading step of loading a sample 1, which is a process object, (S100) into a laser processing apparatus, a step of inputting processing data including a laser output for laser processing of the sample 1, which is a process object (S200), a step of acquiring surface temperature or melting temperature information measured in real time from the heat distribution measurement unit 310 for laser processing of the sample 1, which is a process object (S300), and steps of adjusting and processing the output, power, and the laser beam emitted to the sample 1, which is a process object (S500 and S600), by reflecting the information acquired from the heat distribution measurement unit 310.

If necessary, a step of correcting the processing position of the laser beam according to the temperature information of the sample 10, which is the processed object, (S400) measured by the heat distribution measurement unit 310 may be further included. That is, when the temperature of the processing point of the sample 1, which is the processed object, is determined as a high temperature by comparing with the previously input threshold value, soldering may be preferentially performed by changing the processing point.

In the processing process using the laser processing apparatus 100 described above, as shown in FIG. 4, preheating and soldering processes may be performed at predetermined temperatures, respectively. In this case, the temperature measured in the preheating process and the soldering process may be measured by the high temperature measuring system 310 described above. Preferably, in the preheating process and the soldering process, the surface temperature or the melting temperature of the sample 1, which is the processed object, may be measured in a temperature range of approximately 1 to 500 degrees.

First, a sample 1, which is an processed object, is loaded onto a processing stage such as a precision stage (S100). When the loading of the sample 1, which is an processed object, on the processing stage is completed, an inspection may be performed. In this case, information such as a position, an alignment state, or the like, which is confirmed by inspection may be acquired from the sample 1, which is the processed object, in a non-contact manner by using a camera (not shown) provided as a CCD or a CMOS. Data such as the output, current, and voltage of the laser beam to be soldered may be determined and input according to the external shape of the sample 1 that is the processed object on which the inspection is completed (S200). The output, current, or voltage of the input laser beam may be determined according to a predetermined setting value, but such a setting value may be adjusted according to the surface temperature or melting temperature of the sample 1, which is an processed object to be described later.

After the step of inputting the processing information of the sample 1, which is the processed object (S200), the step of acquiring surface temperature or melting temperature information measured in real time from the thermal distribution measurement unit 310 (S300) may be performed. Here, the step of inputting the processing information of the sample 1, which is the processed object (S200), may be the output or power of the laser beam primarily set according to the appearance or processing area of the sample 1, which is the processed object. In addition, it may be the output of the laser beam that is secondarily set according to the surface temperature of the sample 1, which is the processed object, measured by the thermal distribution measurement unit 310. Preferably, the output of the laser beam may be irradiated at a size in the range of approximately 1 to 4,000W.

After the output of the laser beam is adjusted according to the surface temperature of the sample 1, which is the processed object (S500), the output of the laser beam irradiated from the laser irradiation unit 330 may be adjusted. The control of the output of the laser beam may be controlled by the control unit 70 according to surface temperature information or solder melting temperature information of the sample 1, which is an processed object, measured by the heat distribution measurement unit 310.

Here, the output of the laser beam irradiated from the laser irradiation unit 330 may be adjusted according to the melting temperature during the processing, in addition to the surface temperature of the sample 1 that is the processed object.

Finally, the step of finally processing the sample 1, which is the processed object (S600), may be performed. The step of processing operation (S600) may be defined as an operation of performing processing such as soldering by using the laser beam irradiated from the beam focusing unit 320 and the laser irradiation unit 330. Here, the meaning of laser processing means that a sample 1, which is an processed object, is processed by a laser according to the soldering information. In this case, the control unit 70 may include laser processing parameter information such as a wavelength, an output, a pulse width, a shape of a beam, a spot size, and a focus position of the laser, and width, interval, and processing speed information of the laser in the case of a pattern, marking, cutting, or skiving so that the laser may be irradiated.

In a specific example, as shown in FIG. 2, the laser beam irradiated from the laser irradiation unit 330 may be adjusted and irradiated to a predetermined processing area B according to the measurement area C of the high temperature measurement system 310. According to the present invention, it is preferable that "C" defined as the surface temperature measurement area of the sample 1, which is the processed object, is formed smaller than the processing area B to which the laser beam is irradiated. Therefore, the processing region B may be finely moved or adjusted according to the surface temperature or the melting temperature of the measurement region C of the sample 1, which is the processed object, and more effective and fine processing may be performed.

This enables direct real-time correction by measuring the surface temperature and the melting temperature of the sample 1, which is the processed object, during the processing of the laser processing apparatus according to the present invention for the processed object, thereby eliminating the need for an additional apparatus for adjusting the size of the laser beam in the optical head and enabling more effective processing without losing or changing the center energy distribution for the processing area. That is, according to the present disclosure, it is possible to prevent a peripheral effect of the sample 1 to be processed, which may occur due to defocusing of a laser focus for adjusting an area of a laser spot according to a solder ball in order to solder the sample 1 to be processed, for example, a phenomenon such as cold-lead by burning or underheating.

Here, the imaging area A of the camera (not shown) provided with the CCD or CMOS described above is set to be wider than the processing area B and the measurement area C of the high temperature measurement system 310, so that it is possible to analyze and check the quality even after processing as well as the processing state during the processing.

Although the representative embodiments of the present disclosure have been described in detail above, it will be understood by those skilled in the art to which the present disclosure pertains that various modifications may be made to the above-described embodiments without departing from the scope of the present disclosure. Therefore, the scope of the present invention should not be limited to the embodiments described above, but should be defined by those equivalent to the claims as well as the claims described below.

## Claims

1. A laser processing apparatus comprising:
a laser generator;
a beam conversion apparatus configured to adjust a size or a shape of a laser beam generated by the laser generator;
a beam adjustment part configured to adjust a focal position of the laser beam comprising passed through the beam conversion apparatus;
a heat distribution measurement part configured to measure at least one of a surface temperature and a melting temperature of a processing target;
a controller configured to adjust or control an intensity of the laser beam to the measured temperature of the processing target; and
a beam focusing part configured to focus and transfer the laser beam comprising passed through the beam conversion apparatus to the processing target.

2. The laser processing apparatus of claim 1, wherein the beam focusing unit further comprises a laser output detector configured to measure and adjust an output of the laser.

3. The laser processing apparatus of claim 1, further
comprising:
a laser irradiator configured to irradiate the laser beam onto the processed object by obtaining information on a position and an alignment state to which the laser transmission from the beam focusing unit is to be irradiated.

4. The laser processing apparatus of claim 1, wherein an area of the measurement point of the heat distribution measurement unit is set to be smaller than an area of the processed object.

5. The laser processing apparatus of claim 1, wherein the heat distribution measurement unit measures a surface temperature or a melting temperature of the processed object in a temperature range of 1 to 500 degrees Celsius.

6. The laser processing apparatus of claim 1, wherein the heat distribution measuring unit comprises at least one of an infrared camera and a pyrometer.

7. The laser processing apparatus of claim 1, wherein the heat distribution measuring unit is coupled to an upper end portion of the light collecting unit to increase measurement efficiency of at least one of the surface temperature and the melting temperature of the processed object.

8. The laser processing apparatus of claim 3, wherein the laser output irradiated from the laser irradiation unit includes a structure irradiated in a range of 1 to 4,000 Watt.

9. The laser processing apparatus of claim 1, wherein an output power of the laser beam of the laser irradiation unit is adjusted according to at least one of a surface temperature and a melting temperature of the processed object of the thermal distribution measurement unit.

10. The laser processing apparatus of claim 1, wherein at least one optical lens configured to correct a magnification of the laser is disposed in the laser generating unit.

11. The laser processing apparatus of claim 1, further comprising a structure in which an illumination unit is disposed on one side of the laser generation unit.

12. The laser processing apparatus of claim 1, wherein the information about the irradiation position and alignment state of the laser is acquired by an imaging apparatus including at least one of a charge-coupled apparatus (CCD) and a complementary metal-oxide semiconductor (CMOS).

13. The laser processing apparatus of claim 3, wherein the laser beam irradiated from the laser generating unit sequentially passes through the beam focusing unit and the laser irradiating unit and is irradiated to have the same central axis.

14. The laser processing apparatus of claim 1, wherein the controller controls at least one of an output, a current, and a voltage of the laser to be adjusted according to a measured temperature of the thermal distribution measurement unit.

15. A laser processing method comprising:
loading a processed object into a laser processing apparatus;
inputting processing data including a laser output for laser processing of the processed object;
acquiring surface temperature or melting temperature information measured in real time by a heat distribution measuring unit for laser processing of the processed object; and
adjusting the laser output irradiated to the processed object by reflecting the information acquired by the heat distribution measuring unit.

16. A processed object processed according to any one of the processing apparatuses of claims 1 to 14 and the processing method of claim 15.
